# FASCICULE DE BREVET EUROPEEN

(11) **EP 1 028 858 B1**
(45) Date de publication et mention de la délivrance du brevet: **23.01.2002**
(21) Numéro de dépôt: 98954450.7
(22) Date de dépôt: 27.10.1998
(51) Int. Cl.: B60C 9/22, B60C 9/18, B60C 9/20

(54) **ARMATURE DE SOMMET POUR PNEUMATIQUE "POIDS-LOURDS"**
VERSTÄRKUNGSGÜRTEL FÜR LKW-REIFEN
CROWN PLY REINFORCEMENT FOR HEAVY VEHICLE TYRE

(30) Priorité: 05.11.1997 FR 9714011
(43) Date de publication de la demande: 23.08.2000
(73) Titulaire: Compagnie Générale des Etablissements MICHELIN-MICHELIN & CIE, 63040 Clermont-Ferrand Cedex 09 (FR)
(72) Inventeur: CLUZEL, Guy, F-63110 Beaumont (FR)
(74) Mandataire: Devaux, Edmond-Yves
(86) Numéro de dépôt international: EP9806798
(87) Numéro de publication internationale: WO9924269

(56) Documents cités:
- EP-A- 0 719 659
- WO-A-96/20095
- US-A- 4 696 335
- PATENT ABSTRACTS OF JAPAN vol. 097, no. 011, 28 novembre 1997 & JP 09 175109 A (BRIDGESTONE CORP), 8 juillet 1997
- PATENT ABSTRACTS OF JAPAN vol. 017, no. 694 (M-1531), 17 décembre 1993 & JP 05 238206 A (BRIDGESTONE CORP), 17 septembre 1993

## Description

La présente invention concerne un pneumatique à armature de carcasse radiale ancrée de part et d'autre à au moins une tringle de bourrelet et ayant une armature de sommet constituée d'au moins deux nappes dites de travail, superposées et formées de fils ou câbles parallèles dans chaque nappe et croisés d'une nappe à la suivante en faisant avec la direction circonférentielle du pneumatique des angles au plus égaux à 45° en valeur absolue.

Elle concerne plus particulièrement un pneumatique du type "Poids-Lourds", dont le rapport de la hauteur sur jante H sur sa largeur axiale maximale S est au plus égal à 0,80, et destiné à équiper un véhicule de moyen ou fort tonnage, tel que camion, autobus, remorque, etc.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Le brevet FR 2 419 185 enseigne que le type de pneumatique concerné, à rapport H/S faible, bien que présentant de nombreux avantages, comporte aussi un certain nombre d'inconvénients, tel que l'adhérence médiocre de la zone équatoriale de la bande de roulement ou une localisation des pressions élevées dans la région des bords de bande de roulement; dues au raccourcissement de l'aire de contact dans le sens longitudinal du pneumatique. Afin de remédier aux dits inconvénients, le brevet FR cité préconise de disposer entre l'armature de carcasse et la nappe de travail radialement intérieure, dans deux zones distantes du plan équatorial, deux blocs limiteurs constitués chacun de deux nappes superposées de câbles inextensibles, croisés d'une nappe à l'autre en faisant avec la direction circonférentielle des angles opposés, au plus égaux en valeur absolue à la moitié du plus petit angle utilisé dans les nappes de travail, et différents de 0°.

L'application de la solution exposée ci-dessus, son application à un pneumatique de rapport de forme H/S au plus égal à 0,80, en particulier au plus égal à 0,6, et destiné à équiper un véhicule "Poids-Lourds", ne permet pas d'obtenir une endurance satisfaisante de l'armature de sommet.

Le manque d'endurance concerne aussi bien la résistance à la fatigue des nappes de sommet, et en particulier la résistance à la séparation entre extrémités de nappes, que la résistance à la fatigue des câbles de la portion d'armature de carcasse située sous l'armature de sommet, la première insuffisance étant fortement influencée par la température de fonctionnement régnant en bordures des nappes de travail, que ce soit en roulage ligne droite ou en roulage en dérive.

Le brevet FR 2 728 510 a pour objet d'améliorer l'endurance de l'armature de sommet d'un pneumatique "Poids-Lourds", de rapport de forme au plus égal à 0,60, ladite armature comprenant au moins deux nappes de sommet de travail en câbles inextensibles, croisés d'une nappe à la suivante en faisant avec la direction circonférentielle des angles compris entre 10° et 45°, lesdites nappes ayant des largeurs au moins égales à 80 % de la largeur axiale maximale S₀ de l'armature de carcasse. Elle propose de disposer, d'une part entre l'armature de carcasse et la nappe de travail, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle, la largeur axiale de ladite nappe étant au moins égale à 0,7 S₀, et son module d'élasticité à la traction étant au plus égal au module du même nom de la nappe de travail la plus extensible. Les caractéristiques du préambule de la revendication 1 sont connues de ce document.

Le brevet FR 2 744 955, en vue d'abaisser la température de fonctionnement d'un pneumatique à armature de carcasse radiale de type "Poids-Lourds", tout en ayant une solution tout aussi efficace qu'économique, préconise d'adjoindre à ladite armature de carcasse une armature de sommet comprenant au moins deux nappes de sommet de travail en câbles inextensibles, croisés d'une nappe à l'autre, en faisant avec la direction circonférentielle des angles compris entre 10° et 45°, et comprenant en outre, en l'absence de toute nappe formée de câbles inextensibles faisant avec la direction circonférentielle un angle supérieur à 45°, une nappe additionnelle, continue axialement, formée d'éléments métalliques orientés sensiblement parallèlement à la direction circonférentielle, et placée radialement entre les nappes de travail, ladite nappe additionnelle ayant une largeur axiale au moins égale à 1,05 fois la largeur axiale de la nappe de sommet de travail la plus large.

Si les problèmes concernant la séparation entre nappes de travail et la résistance à la fatigue des câbles d'armature de carcasse semblent résolus dans un cas, si les températures de fonctionnement sont fortement abaissées dans l'autre cas, par contre les roulages prolongés des pneumatiques ainsi construits font apparaître des ruptures de fatigue des câbles de la nappe additionnelle et plus particulièrement des bords de ladite nappe, que la nappe dite de triangulation soit présente ou non.

Il est toujours possible de changer les éléments de renforcement concernés, et en particulier de choisir des câbles de construction différente ou des câbles de plus forte résistance à la rupture. La solution ci-dessus, certes facile, est toujours onéreuse.

Afin de remédier aux inconvénients ci-dessus et d'améliorer l'endurance de l'armature de sommet du type de pneumatique étudié, sans en élever le coût, le pneumatique à armature de carcasse radiale de largeur axiale maximale S₀, conforme à l'invention, comprenant une armature de sommet formée d'au moins deux nappes de sommet de travail d'éléments de renforcement inextensibles, croisés d'une nappe à l'autre en faisant avec la direction circonférentielle des angles compris entre 10° et 45°, lesdites nappes ayant des largeurs axiales au moins égales à 80 % de la largeur S₀, et, disposée radialement entre lesdites nappes de travail, d'une nappe additionnelle d'éléments de renforcement sensiblement parallèles à la direction circonférentielle, est caractérisé en ce que les nappes de travail de largeurs supérieures à la largeur de la nappe additionnelle d'au moins 16 % de la largeur S₀, sont de part et d'autre du plan équatorial et dans le prolongement axial immédiat de la nappe additionnelle couplées sur une distance axiale au moins égale à 3,5 % de la largeur S₀, pour être ensuite découplées par des profilés de mélange de caoutchouc au moins sur le restant de la largeur commune aux dites deux nappes de travail.

L'épaisseur des profilés de découplage entre nappes, mesurée au droit des extrémités de la nappe de travail la moins large, sera au moins égale à deux millimètres, et préférentiellement supérieure à 2,5 mm.

Il faut entendre par nappes couplées des nappes dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

Il faut entendre par élément inextensible un élément, câble ou monofilament, qui a un allongement relatif inférieur à 0,2 % lorsqu'il est soumis à une force de traction égale à 10 % de la charge de rupture. Dans le cas du pneumatique considéré, les éléments de renforcement inextensibles sont préférentiellement des câbles métalliques en acier inextensibles.

Des éléments de renforcement, fils ou câbles, orientés sensiblement parallèlement à la direction circonférentielle sont des éléments qui font avec ladite direction des angles compris dans l'intervalle + 2,5°, - 2,5° autour de 0°.

La nappe additionnelle a de manière avantageuse un module d'élasticité sous effort de traction au plus égal au module du même nom de la nappe de travail la plus extensible. Un module d'élasticité à la traction d'une nappe de câbles résulte de la contrainte de traction, exercée selon la direction des câbles, nécessaire pour obtenir un allongement relatif donné ε, ledit module étant un module tangent. Par module d'élasticité de la nappe additionnelle au plus égal au module du même nom de la nappe de travail la plus extensible, il faut entendre que le module tangent de la nappe additionnelle, quelque soit l'allongement relatif, est au plus égal au module tangent de la nappe de travail la plus extensible quelque soit l'allongement relatif, la nappe la plus extensible étant la nappe qui, pour chaque valeur de contrainte de traction présente un allongement relatif supérieur à celui de l'autre nappe pour la même contrainte.

De manière avantageuse et afin de faciliter la fabrication du pneumatique, le module de la nappe additionnelle sera tel qu'il soit faible pour un allongement relatif compris entre 0 % et 0,4 %, et au plus égal au module d'élasticité à la traction le plus élevé de la nappe de travail la plus extensible, pour les allongements relatifs supérieurs à 0,4 %.

Les nappes de travail ont généralement des largeurs axiales inégales. La nappe de travail radialement la plus à l'extérieur peut être moins large axialement que la nappe de travail disposée radialement la plus à l'intérieur : il est alors avantageux que l'armature de sommet soit complétée radialement à l'extérieur par une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail la moins large. Ladite nappe de protection peut avoir une largeur axiale inférieure à la largeur axiale de la nappe de travail la moins large, et ne pas recouvrir ou recouvrir totalement ou partiellement la zone de couplage entre les deux nappes de sommet de travail. Ladite nappe de protection peut aussi avoir une largeur axiale supérieure à la largeur axiale de la nappe de travail la moins large, telle qu'elle recouvre les bords de la nappe de travail la moins large et telle qu'elle soit couplée, dans le prolongement axial de la nappe additionnelle, avec la nappe de sommet de travail la plus large sur une distance axiale au moins égale à 2 % de la largeur S₀, pour être ensuite, axialement à l'extérieur, découplée de ladite nappe de travail la plus large par des profilés d'épaisseur au moins égale à 2 mm. La nappe de protection formée d'éléments de renforcement élastiques peut, dans le cas cité ci-dessus, être d'une part éventuellement découplée des bords de ladite nappe de travail la moins large par des profilés d'épaisseur sensiblement moindre que l'épaisseur des profilés séparant les bords des deux nappes de travail, et avoir d'autre part une largeur axiale inférieure ou supérieure à la largeur axiale de la nappe de sommet la plus large.

Quelle que soit la solution décrite ci-dessus, il est avantageux de compléter l'armature de sommet, radialement à l'intérieur entre l'armature de carcasse et la nappe de travail radialement intérieure la plus proche de ladite armature de carcasse, par une nappe de triangulation d'éléments de renforcement inextensibles faisant, avec la direction circonférentielle, un angle supérieur à 60° et de même sens que celui de l'angle formé par les éléments de renforcement de la nappe radialement la plus proche de l'armature de carcasse. Ladite nappe de triangulation peut avoir une largeur axiale inférieure à ladite nappe de travail la plus large, qui est, dans l'armature de sommet considérée, radialement la plus proche de l'armature de carcasse. Ladite nappe de triangulation peut aussi avoir une largeur axiale supérieure à la largeur de la nappe de travail la plus large, et il est alors avantageux que la nappe radialement à l'extérieur dite de protection, couplée à la nappe de travail la plus large, soit aussi couplée, dans le prolongement axial immédiat de la nappe de travail la plus large, à ladite nappe de triangulation sur une distance axiale d'au moins 0,02 fois la largeur S₀ d'armature de carcasse, pour être ensuite découplée, axialement à l'extérieur, des bords de ladite nappe de triangulation par des profilés d'épaisseur au moins égale à 2 mm. La nappe de protection formée d'éléments de renforcement élastiques peut alors être découplée des bords de ladite nappe de travail la moins large, comme précédemment, par des profilés d'épaisseur sensiblement moindre que l'épaisseur des profilés séparant les bords des deux nappes de travail. Ladite nappe de protection peut aussi être plus large ou moins large que la nappe de triangulation.

La nappe de travail radialement la plus à l'extérieur peut être plus large axialement que la nappe de travail disposée radialement la plus à l'intérieur : il est alors avantageux que l'armature de sommet soit complétée radialement à l'intérieur par une nappe de triangulation d'éléments de renforcement inextensibles faisant, avec la direction circonférentielle, un angle supérieur à 60° de même sens que celui de l'angle des éléments de renforcement de la nappe la moins large (32). La nappe dite de triangulation peut avoir une largeur axiale inférieure à la largeur axiale de la nappe de travail la moins large, c'est-à-dire la radialement la plus proche de l'armature de carcasse. Préférentiellement, ladite nappe de triangulation aura une largeur axiale supérieure à la largeur de la nappe de travail la moins large et une largeur telle qu'elle soit couplée, dans le prolongement axial de la nappe de travail la moins large, avec la nappe de travail la plus large sur une distance axiale d'au moins 0,02 fois la largeur S₀, pour être ensuite découplée des bords de ladite nappe au moyen de profilés de mélange caoutchouteux d'épaisseur au moins égale à 2 mm, et que ce soit la nappe de triangulation ou la nappe de travail la plus large qui ait la plus grande largeur.

Les armatures de sommet qui viennent d'être décrites, avec la nappe de travail radialement la plus éloignée de l'armature de carcasse comme étant axialement la plus large, peut aussi être complétée, radialement à l'extérieur de ladite nappe de travail la plus large, par une nappe de protection d'éléments de renforcement élastiques, orientés par rapport à la direction circonférentielle avec un angle compris entre 10° et 45°, de même sens que celui de l'angle des éléments de la nappe de travail radialement la plus large. Ladite nappe de protection peut avoir une largeur axiale inférieure à la largeur de la nappe de travail la moins large, et recouvrir, totalement ou partiellement la zone de couplage entre les deux nappes de sommet de travail. Elle peut être aussi plus large que la nappe de travail la moins large et moins large que la nappe de travail la plus large, mais aura préférentiellement une largeur axiale telle qu'elle recouvre radialement les bords de la nappe de travail la plus large, en étant éventuellement séparés des dits bords par des profilés d'épaisseur pouvant être inférieure à l'épaisseur des profilés séparant les bords de la nappe de travail la moins large de la nappe de travail la plus large, pour ensuite, dans le prolongement axial de la nappe de travail la moins large, être couplée avec la nappe radialement intérieure de triangulation formée d'éléments inextensibles fortement inclinés, sur une largeur axiale au moins égale à 2 % de la largeur S₀, puis découplée des bords de ladite nappe de triangulation par des profilés caoutchouteux d'épaisseur au moins égale à 2 mm, que ce soit la nappe de triangulation ou la nappe de protection qui soit la plus large.

Les caractéristiques et avantages de l'invention seront mieux compris à l'aide de la description qui suit et qui se réfère au dessin, illustrant à titre non limitatif des exemples d'exécution, et sur lequel :
- la figure 1 représente schématiquement, vu en section méridienne, une première variante préférentielle d'armature de sommet conforme à l'invention,
- la figure 2 représente une deuxième variante préférentielle, conforme à l'invention,
- la figure 3 représente de la même manière une troisième variante.

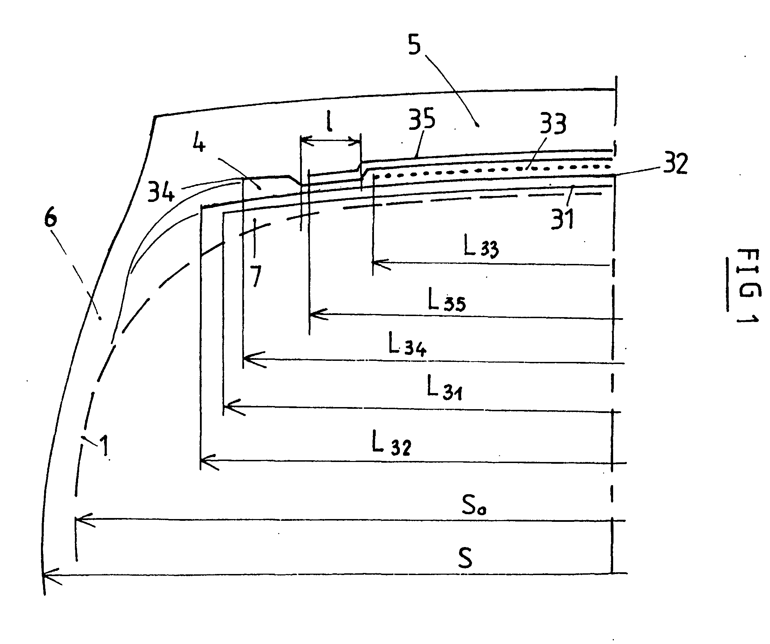

Sur la figure 1, le pneumatique P_{A}, de dimension 495/45 R 22.5 X, a un rapport de forme H/S égal à 0,45, H étant la hauteur du pneumatique P_{A} sur sa jante de montage et S sa largeur axiale maximale. Ledit pneumatique P_{A} comprend une armature de carcasse radiale (1) ancrée dans chaque bourrelet à au moins une tringle en formant un retournement, et formée d'une seule nappe de câbles métalliques. Cette armature de carcasse (1) est frettée par une armature de sommet (3), formée radialement de l'intérieur à l'extérieur :
- d'une première nappe (31), dite de triangulation, de câbles métalliques inextensibles orientés par rapport à la direction circonférentielle d'un angle δ égal à 65°,
- radialement au dessus et recouvrant la nappe précédente dite de triangulation, d'une première nappe de travail (32) formée de câbles métalliques inextensibles orientés d'un angle α, égal dans le cas montré à 18° et de même sens que l'angle δ des éléments de la nappe de triangulation,
- surmontant la première nappe de travail (32), d'une nappe additionnelle (33) formée de tronçons ou de groupes de tronçons de câbles métalliques inextensibles, les dits tronçons ou groupes de tronçons ayant chacun une longueur circonférentielle sensiblement égale à 1/6 de la longueur circonférentielle de la nappe (33), et lesdits éléments étant orientés à 0°, alors que les espaces entre tronçons sont décalés entre eux,
- puis d'une deuxième nappe de travail (34) formée de câbles métalliques identiques à ceux de la première nappe de travail (32), et faisant avec la direction circonférentielle un angle β, opposé à l'angle α et, dans le cas montré, égal audit angle α de 18° (mais pouvant être différent dudit angle α),
- et enfin d'une dernière nappe de câbles dits élastiques orientés par rapport à la direction circonférentielle d'un angle γ de même sens que l'angle β et égal audit angle β (mais pouvant être différent dudit angle), cette dernière nappe étant une nappe de protection.

La largeur axiale L₃₂ de la première nappe de travail (32) est égale à 0,87 fois la largeur axiale maximale S₀ de la fibre moyenne de l'armature de carcasse (1), soit 416 mm, ce qui est, pour un pneumatique de forme usuelle, sensiblement inférieur à la largeur L₁ de la bande de roulement, qui est égale, dans le cas étudié, à 430 mm. La largeur axiale L₃₄ de la deuxième nappe de travail (34) est égale à 0,83 fois la largeur axiale S₀, soit 400 mm. La nappe de triangulation (31) a une largeur axiale L₃₁ intermédiaire entre les largeurs respectives des deux nappes de travail (32, 34) et dans ce cas égale à 408 mm, Quant à la largeur axiale L₃₃ de la nappe additionnelle (33), elle est égale à 320 mm. En fait, la largeur L₃₃ de la nappe additionnelle (33) est inférieure à la largeur L₃₂ (L₃₄) de la nappe de travail la moins large, tout en gardant une largeur suffisante pour contribuer efficacement à la diminution des températures de fonctionnement du pneumatique à proximité des extrémités des nappes de sommet de travail, qui sont les régions les plus pénalisées par l'échauffement et les séparations entre nappes. La dernière nappe de sommet (35), dite de protection, a une largeur L₃₅ sensiblement égale à 370 mm.

Les deux nappes de travail (32) et (34) sont, de chaque côté du plan équatorial et axialement dans le prolongement de la nappe additionnelle (33), couplées sur une largeur axiale 1, égale dans ce cas à 17 mm : les câbles de la première nappe de travail (32) et les câbles de la deuxième nappe de travail, sur la largeur axiale 1 de couplage des deux nappes, sont séparés radialement entre eux par une couche de gomme, dont l'épaisseur est minimale et correspond au double de l'épaisseur de la couche caoutchouteuse de calandrage des câbles métalliques 27.23 frettés dont est formée chaque nappe de travail (32, 34), soit 0,8 mm. Sur la largeur restante commune aux deux nappes de travail, c'est-à-dire environ 20 mm de chaque côté, les deux nappes de travail (32) et (34) sont séparés par un profilé (4) de caoutchouc de forme sensiblement triangulaire, l'épaisseur dudit profilé (4) étant croissante en allant de l'extrémité axiale de la zone de couplage à l'extrémité de la nappe de travail la moins large, pour atteindre à ladite extrémité une épaisseur de 4 mm. Ledit profilé (4) a une largeur suffisante pour recouvrir radialement l'extrémité de la nappe de travail (32) la plus large, qui est, dans ce cas la nappe de travail radialement la plus proche de l'armature de carcasse. Le sommet du pneumatique est complété par une bande de roulement (5) réunie aux bourrelets par deux flancs (6) et la nappe de triangulation, radialement adjacente à l'armature de carcasse (1) de part et d'autre du plan équatorial, s'en éloigne en allant axialement vers l'extérieur, ladite nappe étant réunie à l'armature de carcasse (1) au moyen de profilés (7) de caoutchouc à forme triangulaire.

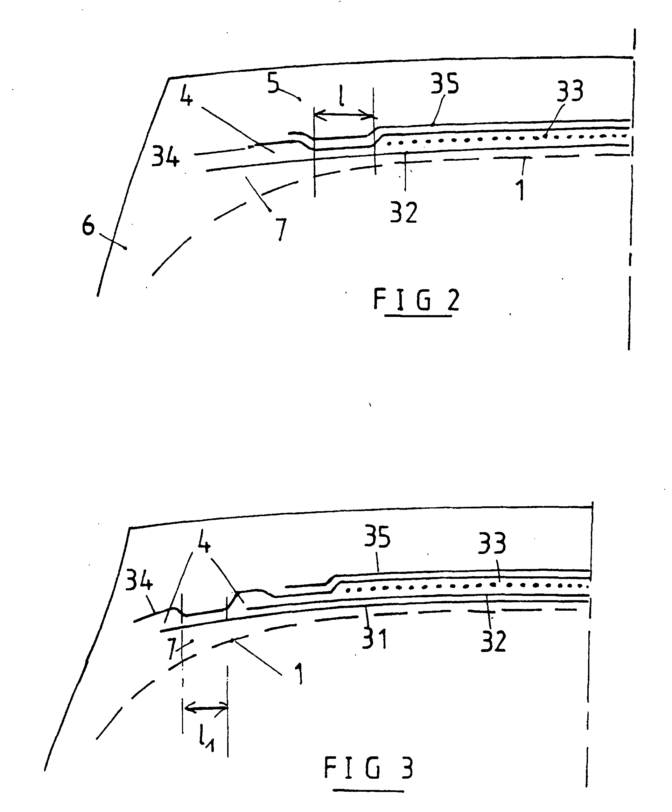

Le pneumatique P_{B} de la figure 2, de dimension 315/80 R 22.5 X, a un rapport de forme H/S égal à 0,8, H étant la hauteur du pneumatique P_{B} sur sa jante de montage et S sa largeur axiale maximale. L'architecture de l'armature de sommet (3) dudit pneumatique P_{B} diffère de celle décrite précédemment par l'absence de nappe dite de triangulation. Ainsi, l'armature de carcasse (1), ancrée dans chaque bourrelet à au moins une tringle en formant un retournement, et formée d'une seule nappe de câbles métalliques, est frettée par une armature de sommet (3), formée radialement de l'intérieur à l'extérieur :
- d'une première nappe de sommet travail (32) formée de câbles métalliques inextensibles en acier, orientés d'un angle α, égal dans le cas montré à 18°, radialement adjacente et parallèle à l'armature de carcasse (1) dans sa partie médiane, dont les bords sont séparés de la dite armature de carcasse par des profilés (7) de caoutchouc d'épaisseur croissante axialement de l'intérieur à l'extérieur,
- surmontant la première nappe de sommet de travail (32), d'une nappe additionnelle (33) formée d'éléments métalliques en acier inextensibles, discontinus de longueur circonférentielle sensiblement égale à 1/6 de la longueur circonférentielle de la nappe (33), lesdits éléments étant orientés à 0°, les bords axialement extérieurs de la première nappe de sommet de travail étant séparés de la nappe additionnelle (33) d'éléments circonférentiels par des couches de caoutchouc de faible épaisseur,
- puis d'une deuxième nappe de sommet de travail (34) formée de câbles métalliques identiques à ceux de la première nappe (32), et faisant avec la direction circonférentielle un anglé β, opposé à l'angle α et, dans le cas montré, égal audit angle α de 18°, (mais pouvant être différent dudit angle α).

La largeur axiale L₃₂ de la première nappe de travail (32) est égale à 235 mm, ce qui est, pour le pneumatique considéré légèrement inférieure à la largeur de la bande de roulement, qui est égale, dans le cas étudié, à 235 mm. La largeur axiale L₃₄ de la deuxième nappe de travail (34) est légèrement inférieure à la largeur L₃₂, puisqu'égale à 210 mm. La largeur axiale L₃₃ de la nappe additionnelle (33) est égale à 176 mm. Les nappes de travail (32) et (34) sont, de chaque côté et de part et d'autre du plan équatorial, dans le prolongement de la nappe additionnelle (33), couplées sur une distance 1 égale à 9 mm, ce qui représente un peu moins de 0,03 fois la largeur axiale maximale de l'armature de carcasse (1), avec la même définition du couplage que dans le cas précédent : épaisseur minimale entre les câbles des nappes et égale dans le cas présent à 1 mm. Sur la largeur restante commune aux deux nappes de travail, c'est-à-dire environ 6 mm de chaque côté, les deux nappes de travail (32) et (34) sont séparés par un profilé (4) de caoutchouc triangulaire ayant une épaisseur de 3 mm, mesurée à l'extrémité de la nappe (34) de travail la moins large, l'épaisseur dudit profilé étant croissante en allant de l'extrémité axiale de la zone de couplage à l'extrémité de la nappe de travail la moins large. L'armature de sommet ainsi décrite est complétée par une dernière nappe (35) de câbles en acier dits élastiques, orientés par rapport à la direction circonférentielle d'un angle γ de même sens que l'angle β et égal audit angle β, (mais pouvant être différent), cette dernière nappe (35) étant une nappe dite de protection, et des câbles dits élastiques étant des câbles ayant à la rupture un allongement relatif au moins égal à 4 %. La largeur axiale L₃₅ de ladite nappe (35) est sensiblement égale à 198 mm, de manière à recouvrir les zones de couplage entre les deux nappes de travail (32) et (34).

Les exemples décrits et montrés sur les figures 1 et 2 concernent une seule zone de couplage entre nappes. Le pneumatique P_{C}, montré sur la figure 3, de même dimension que celle du pneumatique décrit dans le premier exemple, concerne deux zones de couplage entre nappes. L'architecture de l'armature de sommet (3) dudit pneumatique P_{C} diffère de celle du pneumatique P_{A} :
- d'une part par l'inversion des largeurs axiales des deux nappes de travail (32) et (34),
- d'autre part par la modification des largeurs de nappes, de travail (32) et (34) et de triangulation (31), la nappe additionnelle (33) conservant la même largeur de 320 mm, la largeur L₃₂ de la nappe de travail radialement intérieure (32) devenant égale à 380 mm, la largeur L₃₄ de la nappe de travail radialement extérieure (34) devenant égale à 451 mm, de manière à ce que la nappe de triangulation (31) de largeur L₃₁ égale à 431 mm soit couplée, de chaque côté du plan équatorial, avec la deuxième nappe de travail (34) dans le prolongement axial de la première nappe de travail (32), sur une largeur 12 sensiblement égale à 10 mm, les bords de ladite nappe de triangulation (31) étant ensuite découplés de la nappe de travail la plus large (34) par des profilés (4) de 4 mm d'épaisseur. Ladite variante préférentielle permet en particulier d'améliorer la résistance à la séparation entre les bords de nappes de travail au niveau de la nappe la moins large (32).

Bien que non montré, il est facile d'imaginer un pneumatique P_{D} identique au pneumatique P_{C} précédemment décrit et comprenant une armature de sommet avec une nappe de protection plus large que la nappe de travail la plus large, c'est-à-dire dans le cas considéré la nappe de travail radialement la plus éloignée de l'armature de carcasse, et séparée des bords de ladite nappe de travail par des profilés de mélange caoutchouteux d'épaisseur égale à 4 mm.

## Revendications

1. Pneumatique P à armature de carcasse radiale (1) de largeur axiale maximale S₀, comprenant une armature de sommet (3) formée d'au moins deux nappes de sommet de travail (32, 34) d'éléments de renforcement inextensibles, croisés d'une nappe à l'autre en faisant avec la direction circonférentielle des angles compris entre 10° et 45°, lesdites nappes ayant des largeurs axiales L₃₂, L₃₄ au moins égales à 80 % de la largeur S₀, et, disposée radialement entre lesdites nappes de travail, d'une nappe additionnelle (33) d'éléments de renforcement sensiblement parallèles à la direction circonférentielle, est **caractérisé en ce que** les nappes de travail (32, 34) de largeurs L₃₂, L₃₄ supérieures à la largeur L₃₃ de la nappe additionnelle (33) d'au moins 16 % de la largeur S₀, sont de part et d'autre du plan équatorial et dans le prolongement axial immédiat de la nappe additionnelle (33) couplées sur une distance axiale 1 au moins égale à 3,5 % de la largeur S₀, pour être ensuite découplées par des profilés de mélange de caoutchouc au moins sur le restant de la largeur commune aux dites deux nappes de travail (32, 34).

2. Pneumatique selon la revendication 1, **caractérisé en ce que** les profilés (4) ont, au niveau des extrémités de la nappe de travail (32, 34) la moins large, une épaisseur au moins égale à 2 mm.

3. Pneumatique selon la revendication 2, **caractérisé en ce que** l'armature de sommet (3), dont les nappes de travail (32,34) ont des largeurs axiales inégales, la nappe de travail (34) radialement à l'extérieur étant moins large axialement que la nappe de travail (32) disposée radialement à l'intérieur, comprend aussi, radialement à l'extérieur, une nappe (35) d'éléments de renforcement élastiques, orientés par rapport à la direction circonférentielle avec un angle compris entre 10° et 45°, et de même sens que l'angle formé par les éléments inextensibles de la nappe de travail la moins large (34), ladite nappe de protection (35) ayant une largeur axiale L₃₅ inférieure à la largeur axiale L₃₄ de la nappe de travail (34) la moins large.

4. Pneumatique selon la revendication 2, **caractérisé en ce que** l'armature de sommet (3), dont les nappes de travail (32, 34) ont des largeurs axiales inégales, la nappe de travail (34) radialement à l'extérieur étant moins large axialement que la nappe de travail (32) disposée radialement à l'intérieur, comprend aussi, radialement à l'extérieur, une nappe (35) d'éléments de renforcement élastiques, orientés par rapport à la direction circonférentielle avec un angle compris entre 10° et 45°, et de même sens que l'angle formé par les éléments inextensibles de la nappe de travail la moins large (34), ladite nappe (35) ayant une largeur axiale L₃₅ telle qu'elle recouvre radialement les bords de la nappe de travail (34) la moins large, et qu'elle soit ensuite, dans le prolongement axial de la nappe additionnelle, couplée avec la nappe de sommet de travail (32) la plus large, sur une distance axiale l' au moins égale à 2 % de la largeur S₀, pour être ensuite, axialement à l'extérieur, séparée de ladite nappe de travail la plus large (32) par des profilés (4) d'épaisseur au moins égale à 2 mm.

5. Pneumatique selon la revendication 4, **caractérisé en ce que** la nappe de protection (35) formée d'éléments de renforcement élastiques est découplée des bords de ladite nappe de travail la moins large (32) par des profilés d'épaisseur sensiblement moindre que l'épaisseur des profilés (4) séparant les bords des deux nappes de travail (32, 34).

6. Pneumatique selon l'une des revendications 1 à 5, **caractérisé en ce que** l'armature de sommet (3) comprend en outre, radialement à l'intérieur, entre l'armature de carcasse (1) et la nappe de travail radialement intérieure (32), une nappe (31) d'éléments de renforcement inextensibles faisant avec la direction circonférentielle un angle supérieur à 60°, de même sens que l'angle des éléments de renforcement de la nappe de travail (32), et de largeur axiale L₃₁ inférieure à la largeur axiale L₃₂ de la nappe de travail (32) la plus large.

7. Pneumatique selon la revendication 5, **caractérisé en ce que** l'armature de sommet (3) comprend en outre, radialement à l'intérieur, entre l'armature de carcasse (1) et la nappe de travail radialement intérieure (32), une nappe (31) d'éléments de renforcement inextensibles faisant avec la direction circonférentielle un angle supérieur à 60°, de même sens que l'angle des éléments de renforcement de la nappe de travail (32), et de largeur axiale L₃₁ supérieure à la largeur de la nappe de travail la plus large, la nappe de protection (35), couplée à la nappe de travail (32) la plus large, ayant une largeur L₃₅ telle qu'elle soit aussi couplée, dans le prolongement axial immédiat de la nappe de travail (32) la plus large, à ladite nappe (31) de triangulation sur une distance axiale 1" d'au moins 0,02 fois la largeur S₀ d'armature de carcasse (1), pour être ensuite découplée, axialement à l'extérieur, des bords de ladite nappe de triangulation (31) par des profilés (4) d'épaisseur au moins égale à 2 mm.

8. Pneumatique selon le revendication 2, **caractérisé en ce que** l'armature de sommet (3), dont les nappes de travail (32,34) ont des largeurs axiales inégales, la nappe de travail (34) radialement la plus à l'extérieur étant plus large axialement que la nappe de travail (32) disposée radialement la plus à l'intérieur, comprend aussi une nappe (31) d'éléments de renforcement inextensibles faisant avec la direction circonférentielle un angle supérieur à 60°, de même sens que l'angle des éléments de renforcement de la nappe la moins large (32), et dont la largeur axiale L₃₁ est inférieure à la largeur L₃₂ de la nappe (32) la moins large.

9. Pneumatique selon la revendication 2, **caractérisé en ce que** l'armature de sommet (3), dont les nappes de travail (32,34) ont des largeurs axiales inégales, la nappe de travail (34) radialement la plus à l'extérieur étant plus large axialement que la nappe de travail (32) disposée radialement la plus à l'intérieur, comprend aussi une nappe de triangulation (31), d'éléments de renforcement inextensibles faisant avec la direction circonférentielle un angle supérieur à 60° et de même sens que l'angle des éléments de renforcement de la nappe la moins large (32), et de largeur L₃₁ supérieure à la largeur L₃₂ de la nappe de travail (32) la moins large, la nappe de travail (34) de plus grande largeur L₃₄ étant, dans le prolongement immédiat de la nappe de travail (32), couplée avec la nappe (31) de triangulation, sur une distance axiale l₁ d'au moins 0,02 fois la largeur S₀ d'armature de carcasse (1), pour être ensuite découplée des bords de ladite nappe de triangulation (31) au moyen de profilés de mélange caoutchouteux d'épaisseur au moins égale à 2 mm.

10. Pneumatique selon l'une des revendications 8 à 9, **caractérisé en ce que** l'armature de sommet (3) comprend, radialement à l'extérieur de la nappe de travail (34) la plus large, une nappe de protection (35) d'éléments de renforcement élastiques, orientés par rapport à la direction circonférentielle avec un angle compris entre 10° et 45°, et de même sens que l'angle formé par les éléments inextensibles de la nappe de travail la plus large (34).

11. Pneumatique selon la revendication 10, **caractérisé en ce que** l'armature de sommet (3) comprend, radialement à l'extérieur de la nappe de travail (34) la plus large, une nappe de protection (35) d'éléments de renforcement élastiques, orientés par rapport à la direction circonférentielle avec un angle compris entre 10° et 45°, et de même sens que l'angle formé par les éléments inextensibles de la nappe de travail la plus large (34), ladite nappe (35) ayant une largeur axiale L₃₅ telle qu'elle recouvre radialement les extrémités de la nappe de travail (34) la plus large et qu'elle soit, dans le prolongement immédiat de la nappe de travail (32) la moins large, couplée avec la nappe radialement intérieure (31) d'éléments inextensibles fortement inclinés sur une largeur axiale l₂ au moins égale à 2 % de la largeur S₀, puis découplée des bords de ladite nappe de triangulation par des profilés caoutchouteux d'épaisseur au moins égale à 2 mm.

## Patentansprüche

1. Reifen P mit radialer Karkasse (1) mit maximaler Breite S₀ , der eine Scheitelbewehrung (3) aufweist, die aus mindestens zwei Scheitel-Arbeitslagen (32, 34) aus undehnbaren Verstärkungselementen gebildet ist, die von einer Lage zur anderen überkreuz laufen, unter Bildung von Winkeln zur Umfangsrichtung, die zwischen 10° und 45° liegen, wobei die genannten Lagen axiale Breiten L₃₂, L₃₄ aufweisen, die mindestens 80% der Breite S₀ betragen, und, radial zwischen den genannten Arbeitslagen angeordnet, aus einer zusätzlichen Lage (33) aus Verstärkungselementen, die im wesentlichen parallel zur Umfangsrichtung verlaufen, **dadurch gekennzeichnet, daß** die Arbeitslagen (32, 34) mit Breiten L₃₂, L₃₄, die um mindestens 16% der Breite S₀ größer sind als die Breite L₃₃ der zusätzlichen Lage (33), beiderseits der Äquatorialebene und in der unmittelbaren axialen Verlängerung der zusätzlichen Lage (33) über eine axiale Strecke 1 gekoppelt sind, die mindestens 3,5% der Breite S₀ beträgt, um dann durch Profile aus Gummimischung über mindestens den Verbleib der Breite entkoppelt zu werden, die den genannten Arbeitslagen (32, 34) gemeinsam ist.

2. Reifen nach Anspruch 1, **dadurch gekennzeichnet, daß** die Profile (4) auf Höhe der Enden der am wenigsten breiten Arbeitlage (32, 34) eine Dicke haben, die mindestens 2 mm beträgt.

3. Reifen nach Anspruch 2, **dadurch gekennzeichnet, daß** die Scheitelbewehrung (3), deren Arbeitslagen (32, 34) ungleiche axiale Breiten haben, wobei die radial außenliegende Arbeitslage (34) axial weniger breit ist als die radial im Inneren angeordnete Arbeitslage (32), auch radial auf der Außenseite eine Lage (35) aus elastischen Verstärkungselementen aufweist, die bezüglich der Umfangsrichtung unter einem Winkel orientiert sind, der zwischen 10° und 45° liegt, sowie in der selben Richtung wie der Winkel, der von den undehnbaren Elementen der am wenigsten breiten Arbeitslage (34) gebildet ist, wobei die genannte Schutzlage (35) eine axiale Breite L₃₅ aufweist, die kleiner ist als die axiale Breite L₃₄ der am wenigsten breiten Arbeitslage (34).

4. Reifen nach Anspruch 2, **dadurch gekennzeichnet, daß** die Scheitelbewehrung (3), deren Arbeitslagen (32, 34) ungleiche axiale Breiten haben, wobei die radial außenliegende Arbeitslage (34) axial weniger breit ist als die radial im Inneren angeordnete Arbeitslage (32), auch radial auf der Außenseite eine Lage (35) aus elastischen Verstärkungselementen aufweist, die bezüglich der Umfangsrichtung unter einem Winkel orientiert sind, der zwischen 10° und 45° liegt, sowie in der selben Richtung wie der Winkel, der von den undehnbaren Elementen der am wenigsten breiten Arbeitslage (34) gebildet ist, und wobei die genannte Schutzlage (35) eine solche axiale Breite L₃₅ aufweist, daß sie radial die Ränder der am wenigsten breiten Arbeitslage (34) überdeckt, und daß sie dann in der axialen Verlängerung der zusätzlichen Lage mit der breitesten Arbeitslage (32) über einen Abstand l gekoppelt ist, der mindestens 2% der Breite So beträgt, um dann axial auf der Außenseite von der genannten, breitesten Arbeitslage (32) durch Profile (4) mit einer Dicke von mindestens 2 mm getrennt zu sein.

5. Reifen nach Anspruch 4, **dadurch gekennzeichnet, daß** die Schutzlage (35), die von elastischen Verstärkungselementen gebildet ist, von den Rändern der genannten, am wenigsten breiten Arbeitslage (32) durch Profile in einer Dicke entkoppelt ist, die deutlich geringer ist als die Dicke der Profile (4), die die Ränder der beiden Arbeitslagen (32, 34) trennt.

6. Reifen nach einem der Ansprüche 1 bis 5, **dadurch gekennzeichnet, daß** die Scheitelbewehrung (3) außerdem radial innen zwischen der Karkassenbewehrung (1) und der radial inneren Arbeitslage (32) eine Lage (31) aus undehnbaren Verstärkungselementen aufweist, die zur Umfangsrichtung einen Winkel von mehr als 60° in derselben Richtung wie der Winkel der Verstärkungselemente der Arbeitslage (32) bildet, und mit einer axialen Breite L₃₁, die kleiner ist als die axiale Breite L₃₂ der breitesten Arbeitslage (32).

7. Reifen nach Anspruch 5, **dadurch gekennzeichnet, daß** die Scheitelbewehrung (3) außerdem auf der Innenseite zwischen der Karkassenbewehrung (1) und der radial inneren Arbeitslage (32) eine Lage (31) aus undehnbaren Verstärkungselementen aufweist, die zur Umfangsrichtung einen Winkel von mehr als 60° in der selben Richtung wie der Winkel der Verstärkungselemente der Arbeitslage (32) bildet, und mit einer axialen Breite L₃₁, die größer ist als die axiale Breite der breitesten Arbeitslage, wobei die Schutzlage (35), die mit der breitesten Arbeitslage (32) gekoppelt ist, eine solche Breite L₃₅ aufweist, daß sie auch in der unmittelbaren axialen Verlängerung der breitesten Arbeitslage (32) mit der genannten Triangulationslage (31) über eine axiale Strecke 1" von mindestens dem 0,02-fachen der Breite S₀ der Bewehrung der Karkasse (1) zusammengekoppelt ist, um dann axial auf der Außenseite von den Rändern der genannten Triangulationslage (31) durch Profile (4) mit einer Dicke entkoppelt zu werden, die mindestens 2 mm beträgt.

8. Reifen nach Anspruch 2, **dadurch gekennzeichnet, daß** die Scheitelbewehrung (3), deren Arbeitslagen (32, 34) ungleiche axiale Breiten haben, wobei die radial am weitesten außenliegende Arbeitslage (34) axial breiter ist als die radial am weitesten innen angeordnete Arbeitslage (32), auch eine Lage (31) aus undehnbaren Verstärkungselementen aufweist, die zur Umfangsrichtung einen Winkel von mehr als 60° in der selben Richtung wie der Winkel der Verstärkungselemente der am wenigsten breiten Lage (32) aufweisen, und deren axiale Breite L₃₁ kleiner ist als die Breite L₃₂ der am wenigsten breiten Lage (32).

9. Reifen nach Anspruch 2, **dadurch gekennzeichnet, daß** die Scheitelbewehrung (3), deren Arbeitslagen (32, 34) ungleiche axiale Breiten haben, wobei die radial am weitesten außenliegende Arbeitslage (34) axial breiter ist als die radial am weitesten innen angeordnete Arbeitslage (32), auch eine Triangulationslage (31) aus undehnbaren Verstärkungselementen aufweist, die zur Umfangsrichtung einen Winkel von mehr als 60° und in der selben Richtung wie der Winkel der Verstärkungselemente der am wenigsten breiten Lage (32) aufweisen, und deren axiale Breite L₃₁ größer ist als die Breite L₃₂ der am wenigsten breiten Lage (32), wobei die Arbeitslage (34) mit der größeren Breite L₃₄ in der unmittelbaren Verlängerung der Arbeitslage (32) mit der Triangulationslage (31) über eine radiale Strecke l₁ von mindestens dem 0,02-fachen der Breite So der Bewehrung der Karkasse (1) gekoppelt ist, um dann von den Rändern der genannten Triangulationslage (31) mittels Profilen aus gummihaltiger Mischung in einer Dicke von mindestens 2 mm entkoppelt zu sein.

10. Reifen nach einem der Ansprüche 8 bis 9, **dadurch gekennzeichnet, daß** die Scheitelbewehrung (3) radial auf der Außenseite der breitesten Arbeitslage (34) eine Schutzlage (35) aus elastischen Verstärkungselementen aufweist, die bezüglich der Umfangsrichtung in einem Winkel orientiert sind, der zwischen 10° und 45° liegt und in derselben Richtung verläuft wie der Winkel, der durch die undehnbaren Elemente der breitesten Arbeitslage (34) gebildet ist.

11. Reifen nach Anspruch 10, **dadurch gekennzeichnet, daß** die Scheitelbewehrung (3) radial auf der Außenseite der breitesten Arbeitslage (34) eine Schutzlage (35) aus elastischen Verstärkungselementen aufweist, die bezüglich der Umfangsrichtung in einem Winkel orientiert sind, der zwischen 10° und 45° liegt und in derselben Richtung verläuft wie der Winkel, der durch die undehnbaren Elemente der breitesten Arbeitslage (34) gebildet ist, daß die genannte Lage (35) eine solche axiale Breite L₃₅ aufweist, daß sie radial die Enden der breitesten Arbeitslage (34) überdeckt, und daß sie in der unmittelbaren Verlängerung der am wenigsten breiten Arbeitslage (32) mit der radial inneren Lage (31) aus undehnbaren, kräftig geneigten Elementen über eine axiale Breite l₂ von mindestens 2% der Breite So gekoppelt ist und dann von den Rändern der genannten Triangulationslage durch gummihaltige Profile mit einer Dicke von mindestens 2 mm entkoppelt ist.

## Claims

1. Tyre P with radial carcass reinforcement (1) having a maximum axial width S₀, comprising a crown reinforcement (3) composed of at least two working crown plies (32, 34) of inextensible reinforcing elements, crossing from one ply to the next at angles of between 10E and 45° relative to the circumferential direction, the said plies having axial widths L₃₂, L₃₄ equal to at least 80% of the width S₀, and, arranged radially between the said working plies, an additional ply (33) of reinforcing elements essentially parallel to the circumferential direction,
**characterized in that**
the working plies (32, 34) having widths L₃₂, L₃₄ greater than the width L₃₃ of the additional ply (33) by at least 16% of the width S₀ are, on both sides of the equatorial plane and in the immediate axial extension of the additional ply (33), coupled over an axial distance l equal to at least 3.5% of the width S₀, being then separated by a section of rubber mix at least over the remainder of the width common to the two working plies (32, 34).

2. Tyre according to Claim 1,
**characterized in that**
the sections (4) have, at the ends of the narrowest working ply (32, 34), a thickness equal to at least 2 mm.

3. Tyre according to Claim 2,
**characterized in that**
the crown reinforcement (3), whose working plies (32, 34) have unequal axial widths, the radially external working ply (34) being axially narrower than the working ply (32) arranged radially on the inside, comprises also, radially on the outside, a ply (35) of elastic reinforcing elements, arranged with respect to the circumferential direction at an angle of between 10° and 45° and having the same orientation as the angle formed by the inextensible elements of the narrowest working ply (34), the said protective ply (35) having an axial width L₃₅ smaller than the axial width L₃₄ of the narrowest working ply (34).

4. Tyre according to Claim 2,
**characterized in that**
the crown reinforcement (3), whose working plies (32, 34) have unequal axial widths, the radially external working ply (34) being axially narrower than the radially internal working ply (32), also comprises a radially external ply (35) of elastic reinforcing elements, arranged at an angle with respect to the circumferential direction of between 10° and 45° and having the same orientation as the angle formed by the inextensible elements of the narrowest working ply (34), the said ply (35) having an axial width L₃₅ such that it radially covers the edges of the narrowest working ply (34) and is then, in the axial extension of the additional ply, coupled with the widest working crown ply (32) over an axial distance l' equal to at least 2% of the width S₀, thereafter being separated axially on the outside from the said widest working ply (32) by sections (4) at least 2 mm in thickness.

5. Tyre according to Claim 4,
**characterized in that**
the protective ply (35) composed of elastic reinforcing elements is separated from the edges of the said narrowest working ply (32) by sections having a thickness appreciably smaller that the thickness of the sections (4) separating the edges of the two working plies (32, 34).

6. Tyre according to any one of Claims 1 to 5,
**characterized in that**
the crown reinforcement (3) additionally comprises, radially on the inside, between the carcass reinforcement (1) and the radially internal working ply (32), a ply (31) of inextensible reinforcing elements forming an angle with respect to the circumferential direction greater than 60°, having the same orientation as the angle of the reinforcing elements of the working ply (32), and an axial width L₃₁ smaller than the axial width L₃₂ of the widest working ply (32).

7. Tyre according to Claim 5,
**characterized in that**
the crown reinforcement (3) additionally comprises radially on the inside, between the carcass reinforcement (1) and the radially internal working ply (32), a ply (31) of inextensible reinforcing elements forming an angle with respect to the circumferential direction greater than 60° having the same orientation as the angle of the reinforcing elements in working ply (32), and with an axial width L₃₁ greater than the width of the widest working ply, the protective ply (35) coupled to the widest working ply (32) having a width L₃₅ such that it is also coupled, in the immediate axial extension of the widest working ply (32), to the said triangulation ply (31) over an axial distance l" at least 0.02 times the width S₀ of the carcass reinforcement (1), thereafter being separated axially on the outside from the edges of the said triangulation ply (31) by sections (4) having a thickness of at least 2 mm.

8. Tyre according to Claim 2,
**characterized in that**
the crown reinforcement (3), whose working plies (32, 34) are of unequal widths, the radially outermost working ply (34) being axially wider than the radially innermost working ply (32), also comprises a ply (31) of inextensible reinforcing elements forming an angle with respect to the circumferential direction greater than 60° having the same orientation as the angle of the reinforcing elements of the narrowest ply (32), and whose axial width L₃₁ is smaller than the width L₃₂ of the narrowest ply (32).

9. Tyre according to Claim 2,
**characterized in that**
the crown reinforcement (3), whose working plies (32, 34) are of unequal widths, the radially outermost working ply (34) being axially wider than the radially innermost working ply (32), also comprises a triangulation ply (31) of inextensible reinforcing elements forming an angle with respect to the circumferential direction greater than 60° having the same orientation as the angle of the reinforcing elements of the narrowest ply (32), and with the width L₃₁ greater than the width L₃₂ of the narrowest working ply (32), the working ply (34) with the larger width L₃₄ being, in the immediate extension of working ply (32), coupled with the triangulation ply (31) over an axial distance l₁ at least 0.02 times the width S₀ of the carcass reinforcement (1), thereafter being separated from the edges of the said triangulation ply (31) by means of sections made from a rubber-like mix and having a thickness of at least 2 mm.

10. Tyre according to any one of Claims 8 to 9,
**characterized in that**
the crown reinforcement (3) comprises, radially on the outside of the widest working ply (34), a protective ply (35) of elastic reinforcing elements arranged at an angle with respect to the circumferential direction of between 10° and 45° having the same orientation as the angle formed by the inextensible elements of the widest working ply (34).

11. Tyre according to Claim 10,
**characterized in that**
the crown reinforcement (3) comprises, radially on the outside of the widest working ply (34), a protective ply (35) of elastic reinforcing elements arranged at an angle with respect to the circumferential direction of between 10° and 45° having the same orientation as the angle formed by the inextensible elements of the widest working ply (34), the said ply (35) having an axial width L₃₅ such that it radially covers the ends of the widest working ply (34) and, in the immediate extension of the narrowest working ply (32), is coupled with the radially internal ply (31) of inextensible elements steeply inclined over an axial width l₂ equal to at least 2% of the width S₀, thereafter being separated from the edges of the said triangulation ply by rubber-like sections having a thickness of at least 2 mm.
